Europäisches Patentamt

**European Patent Office**

**Office européen des brevets**

(11) Numéro de publication: **0 164 277**
**B1**

## (12) FASCICULE DE BREVET EUROPÉEN

(45) Date de publication du fascicule du brevet:
04.01.89

(21) Numéro de dépôt: **85400524.6**

(22) Date de dépôt: **19.03.85**

(51) Int. Cl.⁴: **B 65 B 31/00,** B 65 B 55/18,
B 65 D 6/30, A 23 L 3/04

(54) Procédé et installation d'obtention d'un produit alimentaire aqueux emballé sous vide profond.

(30) Priorité: **22.03.84 FR 8404437**
**14.03.85 FR 8503782**

(43) Date de publication de la demande:
**11.12.85 Bulletin 85/50**

(45) Mention de la délivrance du brevet:
**04.01.89 Bulletin 89/1**

(84) Etats contractants désignés:
**AT BE CH DE GB IT LI LU NL SE**

(56) Documents cité:
**DE-A-1 767 495**
**DE-B-1 285 348**
**US-A-1 355 091**
**US-A-1 604 402**
**US-A-2 040 726**
**US-A-2 268 563**
**US-A-2 630 957**
**US-A-3 204 595**

(73) Titulaire: **Larroche, Michel Henri Roland, 12, Allée Lamartine, F-47300 Villeneuve- sur- Lot (FR)**

(72) Inventeur: **Larroche, Michel Henri Roland, 12, Allée Lamartine, F-47300 Villeneuve- sur- Lot (FR)**

(74) Mandataire: **Durand, Yves Armand Louis, Cabinet Z. Weinstein 20, Avenue de Friedland, F-75008 Paris (FR)**

## Description

La présente invention concerne généralement et a essentiellement pour objet un procédé d'obtention d'un produit alimentaire aqueux emballé sous vide profond, ainsi qu'une installation pour la mise en oeuvre de ce procédé.

Les produits alimentaires aqueux au sens de la présente invention comprennent notamment non seulement des produits d'origine végétale tels que par exemple les fruits, les légumes, les champignons, mais également ceux d'origine animale tels que les viandes et les poissons. En fait cette expression recouvre tout produit alimentaire naturel susceptible d'être additionné d'eau sans dommage pour les qualités organoleptiques de celui-ci.

Actuellement on connaît deux types de procédé pour la conservation de tels produits alimentaires aqueux, suivant leur sensibilité à une oxydation.

Pour des produits contenant des substances susceptibles de se dégrader au contact de l'oxygène, on utilise le procédé par jutage. Le produit alimentaire et le jus ou liquide de couverture qui peut être, par exemple, de l'eau salée ou un sirop au sucre, sont introduits dans un récipient après avoir subi un traitement préalable pour en extraire le gaz. Ce traitement consiste en un blanchiment du produit alimentaire et un chauffage du jus à une température proche de 100°C. Un tel procédé s'applique tout particulièrement aux petits pois en boîte ou en bocal et permet d'éviter le jaunissement de ce produit et l'apparition d'un goût de luzerne.

Cependant ce procédé présente les inconvénients suivants:

- dilution dans le jus d'une partie des sels minéraux, des vitamines, des pigments ainsi que de toute sorte de molécules responsables du goût et de l'odeur ;
- altération des qualités de texture provoquée par des temps de stérilisation plus longs que ceux pratiqués pour le conditionnement de produits sous vide.

Pour les produits peu sensibles à une oxydation, tels que par exemple le mais doux, on utilise déjà depuis de nombreuses années un procédé de conservation sous vide partiel. Ce procédé consiste en une conservation du produit sous une pression absolue inférieure ou égale à 360 mm de mercure.

Selon ce procédé connu le produit est introduit dans un récipient, sans blanchiment préalable, puis on ajoute quelques grammes d'un jus avant de sertir le récipient pourvu d'un couvercle, au moyen d'une sertisseuse sous vide. On obtient ainsi un produit alimentaire conservé sous une atmosphère contenant de l'oxygène, mais stable puisque constitué essentiellement de sucres peu sensibles à l'oxydation.

Cependant, un tel procédé ne peut être utilisé pour conserver la grande majorité des produits alimentaires aqueux , puisque ceux-ci renferment des composés sensibles à l'oxydation tels que pigments, acides gras polyinsaturés, tanins, vitamines, etc.

On connaît également par les brevets US n° 2 040 726 et n° 2 268 563 un procédé et une installation pour l'obtention d'un produit alimentaire aqueux contenu dans un récipient rigide hermétiquement clos et répondant aux préambules des revendications 1 et 2.

Cependant, selon le procédé et l'installation connus, il est préférable d'amener les récipients contenant le produit alimentaire dans une enceinte sous vide ou sous atmosphère de vapeur d'eau avant leur introduction dans l'enceinte de stérilisation dans laquelle est maintenue l'atmosphère de vapeur d'eau de façon à éliminer préalablement en grande partie l'air contenu dans le récipient et en partie au moins dans le produit.

En d'autres termes, une stérilisation efficace de l'ensemble récipient-produit alimentaire ne peut être réalisée que si l'on prévoit une chambre sous vide ou sous atmosphère de vapeur d'eau en amont de la chambre de stérilisation proprement dite, compliquant ainsi la structure et augmentant le coût de l'installation.

La présente invention a pour but de résoudre les problèmes précités en ce que le procédé de l'invention est caractérisé en ce qu'il consiste à recouvrir le produit alimentaire introduit dans le récipient rigide d'un liquide de couverture; à éliminer du récipient tout ou partie du liquide de couverture en l'inclinant dans l'atmosphère de vapeur d'eau afin d'y substituer la vapeur d'eau et à soumettre le récipient en le fermant à une diminution de pression afin de maintenir un dégagement de vapeur d'eau au-dessus de lui.

On assure ainsi l'élimination totale de l'air contenu dans le récipient, par substitution de celui-ci par un liquide. En fait, l'originalité d'un tel procédé réside en ce qu'il consiste à remplacer tout l'air présent dans le récipient par un liquide, puis à éliminer le liquide dans une atmosphère de gaz condensable de façon que ledit gaz entre dans le récipient, gaz qui en se condensant crée le vide requis. La pression à l'intérieur du récipient mesurée à 20°C, est comprise entre 2 337 pascals et 5 842,5 pascals et la pression partielle de vapeur d'eau est au minimum égale à 40 % de ladite pression. Lorsque le niveau de vide est de 2 337 pascals, pression d'équilibre phase vapeur-phase liquide de l'eau, à 20°C, il ne peut y avoir de gaz incondensable dans le récipient. La pression de 5 842,5 pascals indique la limite maximale tolérable de présence de gaz incondensable dans le récipient, permettant la conservation du produit sans perte de ses propriétés organoleptiques. Par ailleurs, en maintenant un dégagement de vapeur en particulier lors de l'opération de sertissage, on évite ainsi toute entrée d'air susceptible d'altérer la bonne conservation du produit.

L'installation selon la présente invention est caractérisée en ce qu'elle comprend les différents dispositifs décrits dans la partie caractérisante de la revendication 2.

Selon une caractéristique particulière de l'invention, pour éliminer le liquide, sans perte de produit, on utilise en outre un opercule perforé qui est disposé sur le bord d'ouverture de chaque récipient, et dont il est rendu solidaire.

Cependant, l'utilisation d'un tel opercule perforé oblige, lors de la fermeture étanche du récipient, à prévoir une étape de stérilisation préalable du couvercle, nécessitant une installation spécifique coûteuse, soit une étape de stérilisation supplémentaire de l'ensemble récipient-couvercle après sertissage.

Par ailleurs, l'opercule précité est mis en place en une extrémité de chaque récipient de façon définitive, de sorte que l'ouverture du récipient, lors de l'utilisation du produit alimentaire qu'il contient, doit être effectuée à l'extrémité opposée ce qui nécessite, durant la fabrication, un dispositif complémentaire de marquage du côté à ouvrir.

La présente invention a également pour objet d'éliminer ces inconvénients en remplaçant, dans un mode de réalisation préféré, l'opercule perforé par un couvercle particulier comme décrit au moins dans la revendication 4 de procédé.

L'invention sera mieux comprise et d'autres buts, caractéristiques et avantages de celle-ci apparaîtront plus clairement à la lumière de la description explicative qui va suivre, faite en référence aux dessins schématiques annexés donnés uniquement à titre d'exemple non limitatif illustrant un mode de réalisation actuellement préféré de l'invention, et dans lesquels:

- la figure 1 est une vue d'ensemble, selon un premier mode de réalisation, d'un dispositif de mise en oeuvre du procédé d'obtention d'un produit alimentaire selon l'invention;
- la figure 2 est une vue de principe montrant une chambre de vidange de l'installation de la figure 1, selon un second mode de réalisation de l'invention;
- la figure 3 représente de façon schématique un mode de réalisation du dispositif permettant d'éliminer le liquide de couverture des récipients, lorsqu'on utilise un opercule perforé;
- la figure 4 est une vue en plan de dessus du couvercle selon un mode de réalisation préféré de l'invention;
- la figure 5 est une vue en coupe transversale suivant la ligne de section V-V de la figure 4;
- la figure 6 est une vue partielle agrandie du détail a de la figure 5;
- la figure 7 est une vue fragmentaire en perspective du dessus d'une portion de couvercle coupé selon un plan diamétral formant plan de symétrie d'un bossage et passant par le milieu de ce dernier;
- la figure 8 représente une vue extérieure de face en élévation, à échelle plus petite, de la boîte ayant son fond extrême supérieur fermé par un couvercle fixé par clinchage en quatre points diamétralement opposés et comportant cinq bossages;
- la figure 9 représente une vue de dessus du couvercle clinché, suivant la flèche IX de la figure 8;
- la figure 9A et une vue partielle en coupe transversale suivant la ligne de section IXA-IXA de la Figure 9, montrant le bord non clinché, au droit d'un bossage, du couvercle sur le corps de boîte;
- la figure 9B est une vue fragmentaire semblable en coupe transversale suivant la ligne de section IXB-IXB de la figure 9, montrant le bord du couvercle clinché au droit d'un bossage et la partie voisine correspondante de l'outil de clinchage;
- la figure 9C est une vue partielle semblable en coupe transversale suivant la ligne de section IXC-IXC de la figure 9, montrant le bord du couvercle clinché à une partie ourlée sans bossage;
- les figures 10A et 10B représentent respectivement des vues partielles semblables en coupe transversale radiale illustrant deux opérations successives d'agrafage du bord du couvercle sur le bord du corps de boîte, avec l'outil d'agrafage montré partiellement sur la figure 10A;
- la figure 10C est une vue partielle semblable en coupe radiale du bord du couvercle après son sertissage sur le bord de boîte; et
- la figure 11 est une vue partielle en perspective d'un couvercle, montrant en particulier la forme spécifique d'un bossage.

Dans un récipient rigide debout tel qu'une boîte, par exemple métallique, ou un bocal est introduit un produit alimentaire tel que défini précédemment. Un liquide de couverture est alors ajouté dans le récipient jusqu'à ras-bord, de façon à se substituer totalement à l'air, ou à un gaz incondensable, présent dans celui-ci. Ce liquide de couverture peut être par exemple de l'eau, de l'eau salée ou un sirop au sucre.

L'ensemble ainsi constitué, et exempt d'air, est introduit dans une enceinte dite de vidange ou règne une atmosphère de vapeur d'eau également exempte d'air. Dans cette atmosphère, on élimine au moins partiellement et de préférence sensiblement totalement le liquide de couverture pour lui substituer de la vapeur d'eau dans le récipient. Pour cela, le récipient, pourvu ou non d'un moyen de fermeture partielle, est incliné ou renversé, comme il sera expliqué par la suite en référence aux différents modes de réalisation des installations permettant la mise en oeuvre du procédé selon l'invention. D'autre part, pour des raisons de facilité et afin d'éviter toute présence d'air dans l'enceinte de vidange, il peut être avantageux que la vapeur d'eau soit surchauffée.

L'ensemble ayant été remis dans sa position normale, c'est-à-dire le bord d'ouverture du récipient vers le haut, on ferme hermétiquement ledit récipient, tout en soumettant l'ensemble, constitué par le produit et le récipient le contenant, à une diminution de pression. Ainsi, il est possible durant cette étape de maintenir un dégagement de vapeur d'eau au-dessus du récipient et d'empêcher ainsi toute entrée d'air et donc d'oxygène dans celui-ci.

Selon un premier mode de réalisation de l'invention, cette fermeture hermétique est effectuée par une sertisseuse sous vide. Pour cela, on effectue la substitution du liquide de couverture par de la vapeur à une pression égale ou faiblement supérieure à la pression atmosphérique. Le récipient est alors hermétiquement fermé par une sertisseuse sous vide et dans ce cas, un traitement thermique, stérilisation ou pasteurisation, après fermeture du récipient, est nécessaire.

Selon un second mode de réalisation de l'invention, la fermeture hermétique est effectuée par une sertisseuse normale, c'est-à-dire fonctionnant sous la pression atmosphérique. Pour cela, la pression de vapeur dans l'enceinte de vidange est alors strictement supérieure à la pression atmosphérique, et le récipient est hermétiquement fermé par une sertisseuse atmosphérique. Dans ce cas, les produits dont l'acidité est forte (pH inférieur à 4, 5), ne nécessiteront pas de traitement thermique ultérieur. Par contre, les produits à pH élevé, (supérieur à 4,5), devront subir un traitement thermique après fermeture du récipient.

Enfin, selon un troisième mode de réalisation de l'invention, la fermeture hermétique est effectuée par une sertisseuse sous pression, c'est-à-dire fonctionnant à l'intérieur d'une enceinte maintenue sous une pression strictement supérieure à la pression atmosphérique. Pour cela, la pression de vapeur règnant dans l'enceinte de vidange doit être strictement supérieure à la pression atmosphérique ou égale à la pression de la sertisseuse. Dans ce cas, la pression de vapeur, et donc la température de la vapeur, permettent une stérilisation ou une pasteurisation du produit lors de la substitution et un traitement thermique après fermeture s'avère donc inutile.

Le produit obtenu à l'issu du procédé précité est donc un produit alimentaire aqueux contenu dans un récipient hermétiquement clos. La pression mesurée à 20°C, à l'intérieur de ce récipient est comprise entre 2337 et 5482,5 Pascals, tandis que la pression partielle de vapeur d'eau est au minimum égale à 40 % de cette pression.

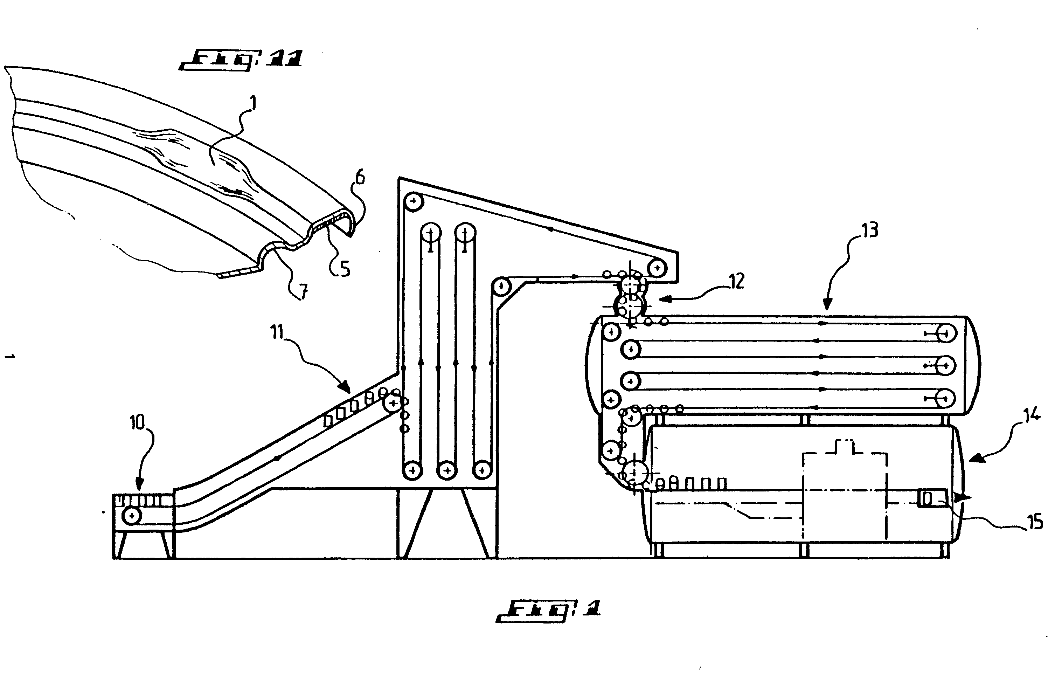

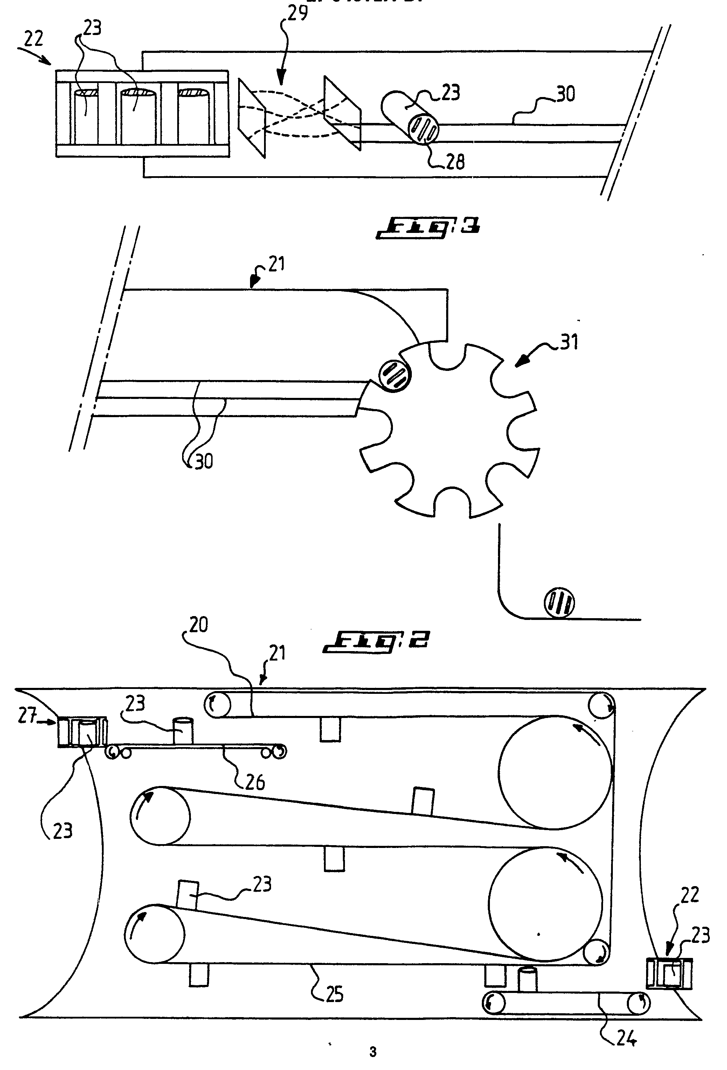

La figure 2 représente de façon schématique une enceinte de vidange 21 selon un premier mode de réalisation de l'invention, et à l'intérieur de laquelle est maintenue, par tout moyen connu, une atmosphère de vapeur d'eau dont la pression est supérieure ou égale à la pression atmosphérique.

A la partie inférieure de cette enceinte, est disposé un sas d'entrée 22 dans lequel sont introduits, en une file, des récipients 23 rigides ouverts contenant un produit alimentaire aqueux recouvert par un liquide de couverture. Dans le prolongement de ce sas d'entrée 22 est situé un premier tapis roulant 24 permettant d'extraire les récipients 23 du sas d'entrée 22.

Au dessus de ce tapis roulant 24 et à son voisinage est disposé un tapis roulant magnétique 25 perforé qui s'étend sensiblement sur toute la longueur et la hauteur de l'enceinte 21.

A la partie supérieure de l'enceinte 21, au dessous d'une portion extrême 20 de déplacement du tapis magnétique 25, et à son voisinage, est disposé un second tapis roulant 26 menant de façon sensiblement horizontale à un sas de sortie 27.

Les récipients 23 ouverts, contenant un produit alimentaire aqueux et un liquide de couverture sont extraits du sas d'entrée 22 par le premier tapis roulant 24. Ces récipients 23 sont ensuite attirés par le tapis magnétique 25, dans sa portion située au dessus du premier tapis roulant 24 et les récipients adhèrent donc contre le tapis 25 par leur face extrême supérieure ouverte.

Le tapis magnétique 25 suit de préférence un parcours sinueux où les récipients, sur certaines parties de ce parcours, sont renversés ce qui permet ainsi l'évacuation par gravité des liquides contenus au travers des perforations ménagées dans le tapis magnétique. L'angle d'inclinaison des récipients par rapport à la verticale est donc, dans cet exemple sensiblement de 180 degrés. Par ailleurs, au fur et à mesure de l'élimination du liquide, la vapeur d'eau présente dans l'enceinte pénètre dans le récipient 23.

A la partie supérieure de l'enceinte 21, les récipients 23 ramenés en position normale debout quittent le tapis 25 par rupture de magnétisme et sont repris par le second tapis roulant 26 pour être acheminés vers le sas de sortie 27. Puis les récipients 23, d'ou s'échappe encore de la vapeur d'eau, sont acheminés vers un dispositif de fermeture hermétique tel qu'une sertisseuse, située par exemple dans une enceinte de sertissage accolée à l'enceinte de vidange 21.

Le sertissage est effectué suivant l'un des procédés décrits précédemment, la pression sous laquelle fonctionne la sertisseuse devant être obligatoirement inférieure à la pression régnant à l'intérieur de l'enceinte 21, de telle sorte qu'il existe toujours une différence de pression favorisant un dégagement de vapeur au-dessus des récipients 23 y compris lors de l'opération de sertissage.

Selon un autre mode de réalisation, pour éliminer le liquide, sans perte de produit, on utilise en outre un opercule perforé 28 qui est déposé dans chaque récipient 23 dont il est rendu solidaire par tout moyen approprié.

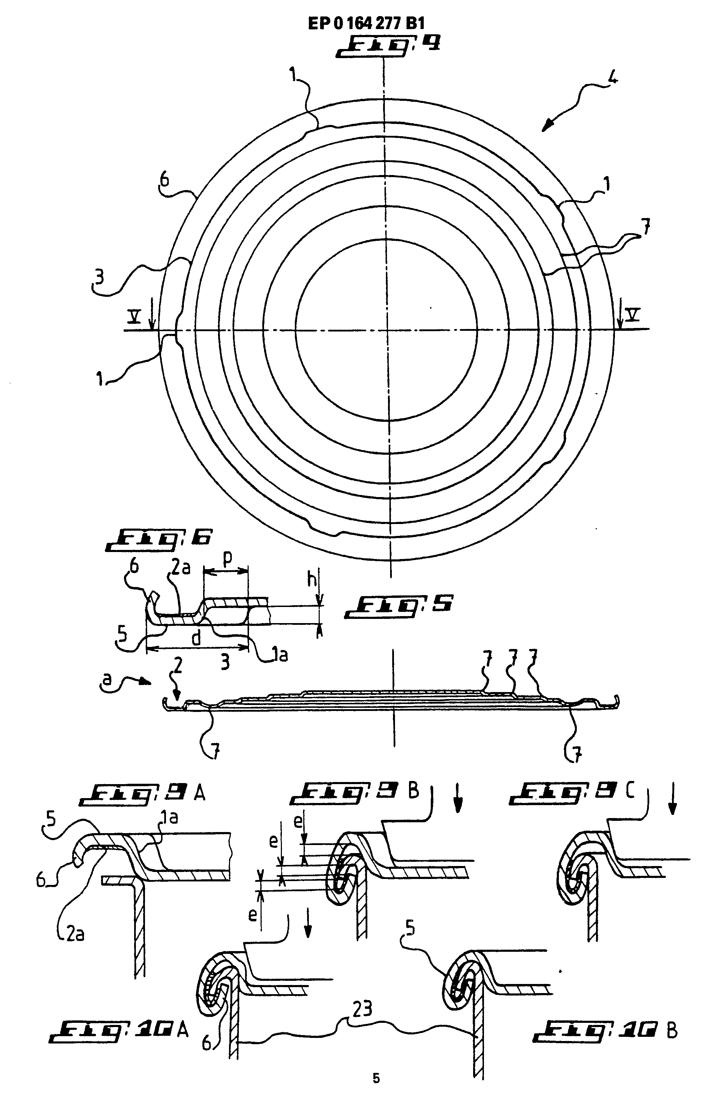

En référence à la figure 3 des dessins, les récipients 23 munis de cet opercule sont introduits comme précédemment dans une enceinte de vidange par l'intermédiaire d'un sas d'entrée 22.

A la sortie du sas 22, les récipients sont couchés, c'est-à-dire qu'ils sont mis en position horizontale, par exemple au moyen d'un champ tourneur 29, puis disposés sur des rails 30 sur lesquels ils roulent tout en se vidant de leur liquide de couverture et en se remplissant simultanément de vapeur d'eau, l'échange de fluides ayant lieu au travers de l'opercule perforé 28.

A l'extrémité des rails 30 se trouve un sas de sortie 31 en forme de carrousel permettant d'extraire les récipients 23 qui, par la suite sont redressés puis fermés hermétiquement comme précédemment, l'opercule 28 restant en place de façon définitive.

Dans un procédé actuellement préféré de l'invention, on a remplacé l'opercule perforé précité par un couvercle particulier conformé pour permettre une fermeture partielle du récipient, et donc l'évacuation du liquide dans l'enceinte de vidange, ce couvercle pouvant ainsi être stérilisé en même temps que la boîte et son contenu.

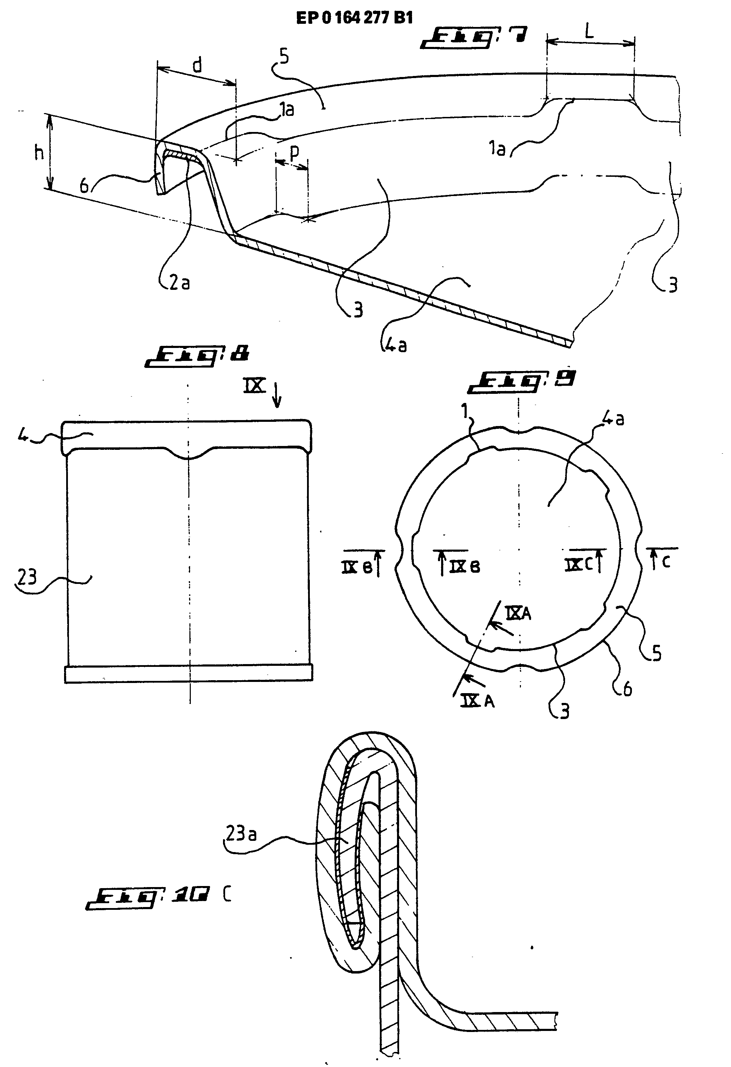

En référence aux figures 4 à 6 annexées, un couvercle 4 de récipient 23, selon l'invention, est constitué d'une plaque sensiblement plane comportant, sur sa face interne, une gorge ou rainure périphérique 2 ayant en coupe transversale, dans l'exemple réprésenté, sensiblement la forme d'un U. De façon générale la gorge ou rainure 2 peut être de toute forme et en particulier sensiblement cylindrique ou prismatique. Sur le fond de la gorge 2 est déposée une garniture de joint d'étanchéité 2a réalisée par exemple en un caoutchouc synthétique. La gorge périphérique 2 est destinée à loger le bord supérieur 23a, conformé à cet effet, du corps d'un récipient 23.

Par ailleurs, la gorge 2 est délimitée vers l'extérieur par un rebord périphérique 6 pouvant être "clinché" localement en des points discrets, sur le bord supérieur 23a du corps de récipient 23, avant d'être agrafé, puis serti sur celui-ci. A cet effet, le rebord périphérique externe 6 est réalisé par pliage du bord extrême 5 du couvercle 4, radialement vers l'intérieur.

La paroi latérale interne 3 de la gorge 2, sensiblement droite en section transversale radiale, comporte un ensemble de bossages 1, linéairement espacés et saillants vers l'intérieur de ladite gorge ou rainure 2. Les bossages sont de préférence régulièrement espacés et leur nombre peut être choisi quelconque en fonction du diamètre du couvercle. Dans l'exemple représenté sur les figures 4 et 9, le couvercle 4, de forme généralement circulaire, comporte cinq bossages 1, angulairement espacés et répartis de façon régulière le long de la gorge circonférencielle 2. La forme particulière du bossage, laquelle fait partie de l'invention, est représentée sur les figures 4 à 7, 9, 9A, 9B et 11.

Selon un mode de réalisation actuellement préfére de l'invention, chaque bossage convexe radialement saillant 1 est délimité, à sa périphérie radialement externe, par une paroi de fond 1a (figure 7) pouvant être par exemple soit sensiblement plane ou bien sensiblement cylindrique coaxialement au couvercle circulaire. Chaque bossage a une hauteur h, dans une direction perpendiculaire à la surface notamment sensiblement plane du fond de la partie formant cuvette 4a du couvercle 4, par exemple sensiblement égale à la profondeur de cette cuvette. La profondeur p du creux ou de la partie concave de chaque bossage est avantageusement inférieure à la moitié de la largeur d de la portion de bordure ourlée 5 du couvercle 4. La longueur périphérique ou circonférentielle L de la paroi de fond 1a de chaque bossage 1 est par exemple d'environ 5 mm (figures 6 et 7).

La figure 8 représente un récipient ou une boîte 23 de préférence cylindrique ronde avec son couvercle 4 comportant par exemple cinq bossages et clinché en quatre points en particulier respectivement dans deux plans diamétraux par exemple orthogonaux (voir figure 9).

La figure 9A montre le couvercle 4 simplement posé, avant clinchage, sur le bord supérieur 23a de la boîte 23 délimitant l'ouverture de celle-ci et l'on voit que l'espace ou intervalle à, entre le bord 5 du couvercle 4 et le rebord 23a de la boîte, est relativement grand.

La figure 9B montre le couvercle 4 clinché, au droit d'un bossage 1, sur le rebord 23a de la boîte et on voit que le couvercle n'est pas en contact, par son fond de gorge 2, avec le bord bombé 23a de la boîte mais en est écarté de l'espace e.

La figure 9C montre le couvercle 4 clinché à une partie ourlée 5 sans bossage sur le rebord de boîte de telle façon qu'un intervalle e subsiste entre le sommet convexe du rebord replié de la boîte et le sommet concave superposé du rebord replié du couvercle, cet intervalle étant inférieur à l'intervalle entre le bord extrême inférieur du rebord de boîte et le fond concave inférieur du rebord de couvercle ainsi qu'à l'intervalle entre le bord extrême du rebord de couvercle et le sommet concave du rebord replié de la boîté.

Le couvercle ayant été clinché sur la boîte, il subsiste, entre les bossages et les points clinchés en direction circonférentielle, des ouvertures de passage entre couvercle et corps de boîte permettant l'écoulement d'évacuation de tout liquide contenu dans la boîte lors de l'inclinaison ou du renversement de celle-ci.

Dans un mode de réalisation actuellement préféré du couvercle 4 selon l'invention, celui-ci comporte, comme le montrent en particulier les figures 4 et 5 des dessins, un certain nombre de nervures ou gradins de renforcement 7 contribuant à sa rigidité.

Après avoir déposé un produit alimentaire dans un récipient rigide 23, puis ajouté à ras-bord un liquide de couverture, le couvercle 4 subit une opération dite de "clinchage" local ou partiel, de façon que les bossages 1 du couvercle 4 soient intérieurement en butée contre le bord du corps de récipient 23. L'opération de clinchage est représentée sur les figures 9B et 9C des dessins respectivement au niveau d'un bossage et en dehors de celui-ci. Cette opération consiste, par pliage du rebord périphérique 6 du couvercle, à solidariser librement celui-ci avec le corps de récipient 23. En fait le bord d'ouverture du corps de récipient 23 est emprisonné en laissant subsister un jeu ou espace entre la paroi externe des bossages 1 et le bord extrême du rebord périphérique 6. Ainsi, entre un bossage 1 quelconque et le point de clinchage ou le bossage voisin le plus proche, il subsiste, comme le montrent en particulier les figures 9 et 9A des dessins, un passage d'évacuation du liquide de couverture. Ce passage est formé entre le bord supérieur du récipient 23 et le fond de la rainure 2. Ainsi, le couvercle 4, selon l'invention, fournit une fermeture temporairement partielle ou incomplète du récipient 23, permettant, par exemple par inclinaison de ce dernier, l'élimination souhaitée du liquide de couverture.

La figure 1 des dessins montre une installation actuellement préférée pour la mise en oeuvre du procédé d'obtention du produit alimentaire selon l'invention. Ce dispositif comporte un sas d'entrée 10 débouchant par une extrémité dans une enceinte de vidange 11 remplie de vapeur saturée, par exemple à 100°C. L'enceinte 11 communique, par l'intermédiaire d'un sas de transfert 12 avec une enceinte de stérilisation 13 remplie de vapeur, par exemple à 130°C. Cette enceinte 13 débouche, en sa partie inférieure, dans une enceinte de sertissage 14. L'enceinte de sertissage 14 est remplie soit de vapeur, soit d'air, à une pression inférieure à la pression régnant dans l'enceinte de stérilisation 13. De plus, l'enceinte de sertissage communique avec un sas de sortie 15.

Dans la partie d'entrée de l'enceinte de vidange 11 et dans l'enceinte de sertissage 14 se trouvent des dispositifs non représentés permettant respectivement de coucher et de relever les récipients.

Par ailleurs, le transport des récipients le long du trajet les conduisant du sas d'entrée 10 au sas de sortie 15 et traversant les enceintes 11, 12, 13 et 14 est assuré au moyen d'une chaîne à barreaux sans fin montée sur pignons, et qui conduit, de préférence bilatéralement, chaque récipient préalablement couché à l'aide du dispositif précité. On prévoit de plus avantageusement des rails de guidage et de roulement sur lesquels les récipients reposent, et peuvent rouler librement dans la chaîne qui se déplace.

Les récipients, dans lesquels on a déposé le produit alimentaire et qui ont été remplis jusqu'à ras-bord de liquide de couverture, sont introduits en file dans le sas d'entrée 10, après qu'un couvercle soit clinché localement en des points discrets, notamment au voisinage des bossages précités sur le bord supérieur du corps de chaque récipient. Le clinchage est réalisé par déformation du bord externe de la gorge périphérique du couvercle radialement vers l'intérieur de façon à solidariser librement le bord du récipient et le bord externe du couvercle.

Préalablement à l'opération de sertissage, on enfonce de force le couvercle 4 jusqu'à ce que le bord 23a dudit corps de récipient 23 vienne en butée contre le fond de la gorge 2, avec refoulement concomittant de la matière des bossages 1, (figure 10A) radialement vers l'intérieur, jusqu'à leur disparition, en uniformisant ainsi la section transversale de la gorge 2. Ceci est suivi des opérations connues d'agrafage (figure 10B) et de sertissage (figure 10C) qui permettent de solidariser de façon serrée et étanche le couvercle et le corps de récipient, en raison de la suppression ainsi réalisée, de toute partie saillante ou en creux sur la paroi latérale radialement interne de la gorge 2.

D'une façon générale, avant sertissage la température et la pression sont rendues telles que l'eau résiduelle contenue dans la boîte et l'eau contenue dans le produit entrent en ébullition provoquant ainsi une vaporisation (dégagement de vapeur), puis le sertissage est effectué. Ainsi, à titre d'exemple selon une première hypothèse la pression dans l'enceinte de vidange 11 peut être fixée à 1 bar. Le sertissage peut alors avoir lieu soit sous une pression inférieure à 1 bar pour provoquer un dégagement de vapeur préalablement au sertissage, puis est effectuée l'opération de stérilisation, soit sous une pression par exemple de 2,5 bars mais après une étape de stérilisation conduite à une pression supérieure, par exemple de 2,7 bars et à 130°C. C'est cette solution qui est illustrée par le dispositif représenté à la figure 1. Dans une autre hypothèse la pression régnant dans l'enceinte de vidange 11 peut être choisie supérieure à une atmosphère et dans ce cas le sertissage est effectué à une pression maximale de une atmosphère permettant également le dégagement de vapeur.

**Revendications**

1. Procédé pour l'obtention d'un produit alimentaire aqueux contenu dans un récipient rigide hermétiquement clos, du type consistant à introduire le produit alimentaire dans le récipient à placer en l'inclinant l'ensemble ainsi constitué dans une atmosphère de vapeur d'eau sensiblement exempt d'air; et à fermer hermétiquement ledit récipient, avant ou après avoir soumis l'ensemble à un traitement thermique; caractérisé en ce qu'il consiste à recouvrir le produit alimentaire introduit dans le récipient rigide d'un liquide de couverture; à éliminer dudit récipient tout ou partie du liquide de couverture en l'inclinant dans l'atmosphère de vapeur d'eau afin d'y substituer la vapeur d'eau et à soumettre le récipient en le fermant à une diminution de pression afin de maintenir un dégagement de vapeur d'eau au-dessus de lui.

2. Installation pour la mise en oeuvre d'un procédé pour l'obtention d'un produit alimentaire aqueux contenu dans un récipient rigide hermétiquement clos, tel que définit à la revendication 1, du type comprenant une enceinte fermée (11, 21) dans laquelle est maintenue une atmosphère de vapeur d'eau; un sas d'entrée (22, 10); un moyen pour extraire lesdits récipients du sas d'entrée et les introduire dans l'enceinte (11, 21); un dispositif pour incliner lesdits récipients dans l'enceinte (11, 21); et un moyen pour extraire lesdits récipients (23) de l'enceinte (11, 21); caractérisée en ce qu'elle comprend un dispositif pour introduire le produit alimentaire dans le récipient (23) en le recouvrant d'un liquide de couverture et un dispositif (25) dans l'enceinte pour éliminer tout ou partie du liquide de couverture contenu dans les récipients (23).

3. Installation selon la revendication 2, caractérisée en ce que le moyen précité pour extraire les récipients du sas d'entrée (10, 22) est constitué par un premier tapis roulant (24) , acheminant lesdits récipients audit dispositif d'élimination de tout ou partie du liquide de couverture qui est constitué par un tapis roulant magnétique perforé (25) permettant le retournement des récipients (23), à parcours sinueux à l'intérieur de l'enceinte (21) et que ledit moyen pour extraire les récipients (23) de l'enceinte (21) comprend un second tapis roulant (26) pour récupérer les récipients (23) transportés par le tapis magnétique (25) et un sas de sortie (27) situé à l'extrémité du second tapis roulant (26).

4. Procédé selon la revendication 1, caractérisé en ce qu'on ferme partiellement le récipient (4) par un couvercle de récipient ayant sur sa face interne une gorge ou rainure périphérique (2) destinée de préférence à recevoir en son fond une garniture de joint d'étanchéité (2a) et à recevoir le bord supérieur du corps du récipient, ladite gorge ou rainure périphérique étant délimitée vers l'extérieur par un rebord périphérique (6) sertissable ou pouvant être agrafé sur le bord d'ouverture dudit corps de récipient; ledit couvercle (4) comprenant au moins deux bossages (1), et de préférence un plus grand nombre, linéairement espacés, saillants vers l'intérieur de la gorge ou rainure (2) et prévus sur la paroi latérale interne (3) de celle-ci, permettant le passage d'évacuation du liquide de couverture précité.

5. Procédé selon la revendication 4, caractérisé en ce que le couvercle (4) est fixé par clinchage local partiel, de façon que les bossages (1) du couvercle (4) soient intérieurement en butée contre le bord du corps de récipient (23) en laissant subsister entre chaque bossage et le bossage suivant ou le point clinchage le plus proche, respectivement des intervalles, pour obtenir une fermeture au moins temporairement partielle ou incomplète permettant le passage d'évacuation du liquide de couverture précité.

6. Procédé selon la revendication 5, caractérisé en ce qu'après avoir clinché le couvercle (4) précité localement en des points discrets, sur le bord supérieur du corps du récipient, le couvercle (4) est enfoncé de force jusqu'à ce que le bord de corps du récipient vienne en butée contre le fond de la gorge (2) précitée, avec refoulement concomitant de la matière des bossages, radialement vers l'intérieur, jusqu'à leur disparition, en uniformisant ainsi la section transversale de la gorge (2).

7. Procédé selon la revendication 6, caractérisé en ce qu'en concommittance avec l'opération de refoulement précitée, le bord du couvercle (4) est agrafé et serti complètement de façon serrée et étanche sur le bord du corps de récipient précité.

**Patentansprüche**

1. Verfahren zum Erhalten eines wässerigen, in einem starren, dichtverschlossenen Behälter enthaltenen Nahrungsmittels, der Gattung, die darin besteht, das Nahrungsmittel in den Behälter einzuführen; die so gebildete Einheit in eine im wesentlichen luftfreie Wasserdampfatmosphäre zu stellen, indem man sie neigt; und den besagten Behälter dicht zu verschließen, bevor oder nachdem man die Einheit einer Wärmebehandlung unterwirft; dadurch gekennzeichnet, daß es darin besteht, das in den starren Behälter eingeführte Nahrungsmittel mit einer Bedeckungsflüssigkeit zu bedecken; die gesamte Bedeckungsflüssigkeit oder einen Teil davon aus dem besagten Behälter herauszunehmen, indem man den Behälter in der Wasserdampfatmosphäre neigt, um die Flüssigkeit durch Wasser zu ersetzen, den Behälter zu schließen und ihn einer Druckabnahme zu unterwerfen, um eine Wasserdampfentwicklung über dem Behälter aufrechtzuerhalten.

2. Vorrichtung zur Durchführung eines Verfahrens zum Erhalten eines wässerigen, in einem starren, dicht verschlossenen Behälter enthaltenen Nahrungsmittels nach Anspruch 1, der Gattung, die ein geschlossenes Gehäuse (11, 21), in dem eine Wasserdampfatmosphäre aufrechterhalten wird, eine Einlaßschleuse (22, 10), ein Mittel, um die besagten Behälter aus der Einlaßschleuse zu entfernen und um sie in das Gehäuse (11, 21) einzuführen; eine Vorrichtung, um die besagten Behälter im Gehäuse (11, 21) zu neigen; und ein Mittel, um die besagten Behälter (23) aus dem Gehäuse (11, 21) zu entfernen, aufweist; dadurch gekennzeichnet, daß sie eine Vorrichtung, um das Nahrungsmittel in den Behälter (23) einzuführen und um das Nahrungsmittel mit einer Bedeckungsflüssigkeit zu bedecken, und eine Vorrichtung (25) im Gehäuse, um die in den Behältern (23) enthaltene Bedeckungsflüssigkeit völlig oder teilweise zu beseitigen, aufweist.

3. Vorrichtung nach Anspruch 2, dadurch gekennzeichnet, daß das besagte Mittel, um die Behälter aus der Einlaßschleuse (10, 22) zu entfernen, aus einem ersten Förderband (24) besteht, das die besagten Behälter zur besagten Vorrichtung, um die Bedeckungsflüssigkeit teilweise oder völlig zu entfernen, bringt, welche Vorrichtung aus einem perforierten magnetischen Förderband (25) besteht, das die Behälter (23) umwendet, und dessen Bahn im Gehäuse (21) gewunden ist, und daß das besagte Mittel, um die Behälter (23) aus dem Gehäuse (21) zu entfernen, ein zweites Förderband (26), um die vom magnetischen Förderband (25) geförderten Behälter (23) zu empfangen und eine am Ende des zweiten Förderbands (26) liegende Auslaßschleuse (27) aufweist.

4. Verfahren nach Anspruch 1, dadurch gekennzeichnet, daß man den Behälter (4) mit einem Behälterdeckel teilweise schließt, welcher Deckel auf seiner inneren Seite eine Umfangsrille oder -nut (2) aufweist, die vorzugsweise dazu bestimmt ist, auf deren Boden eine Dichtung (2a) zu empfangen, und den oberen Rand des Behälterkörpers zu empfangen, wobei die besagte Umfangsrille oder gut nach außen durch einen Umfangsrand (6) begrenzt ist, der gebördelt werden kann oder der auf den Öffnungsrand des besagten Behälterkörpers eingehakt werden kann, wobei der besagte Deckel (4) wenigstens zwei, und vorzugsweise mehr als zwei Buckel (1) aufweist, die auf einer Linie in Abstand voneinander liegen, die in Richtung auf das Innere der Rille oder Nut (2) hineinragen und die auf der inneren Seitenwand (3) derselben vorgesehen sind, wodurch der Durchlaß der besagten Bedeckungsflüssigkeit zum Austrag ermöglicht wird.

5. Verfahren nach Anspruch 4, dadurch gekennzeichnet, daß der Deckel (4) durch örtliches Teilnieten befestigt ist, so daß die Buckel (1) des Deckels (4) innerlich auf dem Rand des Behälterkörpers (23) stoßen und daß Abstände zwischen jedem Buckel und dem folgenden Buckel oder dem nächsten Nietpunkt bleiben, damit ein wenigstens vorübergehend teil- oder unvollständiger Verschluß erfolgt, der den Durchlaß der besagten Bedeckungsflüssigkeit zum Austrag ermöglicht.

6. Verfahren nach Anspruch 5, dadurch gekennzeichnet, daß, nachdem der besagte Deckel (4) an getrennten Punkten auf dem oberen Rand des Behälterkörpers örtlich genietet worden ist, der Deckel (4) gewaltsam eingesetzt wird, bis der Rand des Behälterkörpers auf dem Boden der besagten Rille (2) stößt mit gleichzeitigem radialen Stauchen des Stoffs der Buckel nach innen, bis diese verschwinden, wodurch der Querschnitt der Rille (2) gleichförmig wird.

7. Verfahren nach Anspruch 6, dadurch gekennzeichnet, daß während das besagte Stauchen erfolgt, der Rand des Deckels (4) auf dem besagten Rand des Behälterkörpers fest und dicht eingehakt und völlig gebördelt ist.

**Claims**

1. Method for obtaining an aqueous food product contained inside a rigid sealed container, of the type consisting in introducing the food product into the container; in placing the so-formed unit by tilting it in a water vapour atmosphere substantially free of air; and in sealing the said container, before or after having submitted the unit to a thermal treatment; characterized in that it consists in covering the food product introduced into the rigid container with a covering liquid; in removing from the said container all or a part of the covering liquid by tilting the container in the water vapour atmosphere in order to substitute the water vapour for it and in submitting the container, by closing it, to a pressure decrease in order to maintain a water vapour evolution over it.

2. Plant for carrying out a method for obtaining an aqueous food product contained inside a rigid sealed container, such as defined in claim 1, of the type comprising a closed housing (11, 21) inside which a water vapour atmosphere is maintained; an inlet lock (22, 10); a means for removing the said containers from the inlet lock and for introducing them into the housing (11, 21); a device for tilting the said containers inside housing (11, 21); and a means for removing the said containers (23) from housing (11, 21); characterized in that it comprises a device for introducing the food product into container (23) and for covering the product with a covering liquid, and a device (25) in the housing for removing all or a part of the covering liquid contained inside containers (23).

3. Plant according to claim 2, characterized in that the aforesaid means for removing the containers from the inlet lock (10, 22) is formed of a first belt conveyor (24), which brings the said containers to the said device for removing all or part of the covering liquid, which is formed of a perforated magnetic belt conveyor (25) permitting the containers (23) to be turned upside down, with a sinuous path inside housing (21) and in that the said means for removing the containers (23) from housing (21) comprises a second belt conveyor (26) for recovering the containers (23) transported by magnetic conveyor (25) and an outlet lock (27) located at the end of the second belt conveyor (26).

4. Method according to claim 1, characterized in that the container (4) is partially closed with a container cover having on its inner face a peripheral groove or slot (2) intended preferably to receive on its bottom a gasket seal (2a) and to receive the upper edge of the container body, the said peripheral groove or slot being delimited towards the outside by a peripheral shoulder (6) which can be crimped or which can be clamped on the opening edge of the said container body; the said cover (4) comprising at least two bosses, and preferably more than two bosses (1), which are linearly spaced apart, and which protrude towards the inside of the groove or slot (2) and which are provided on the inner side wall (3) thereof, permitting the aforesaid covering liquid to pass in order to be discharged.

5. Method according to claim 4, characterized in that the cover (4) is fastened by means of local partial clinching, in order that the bosses (1) of cover (4) inwardly abut against the edge of the container body (23) so that intervals remain between each boss and the following boss or the closest clinching point, respectively, for obtaining an at least temporarily partial or incomplete closing permitting the aforesaid covering liquid to pass in order to be discharged.

6. Method according to claim 5, characterized in that, once the aforesaid cover (4) locally clinched at discrete points on the upper edge of the container body, cover (4) is forcibly driven until the edge of the container body abut against the bottom of the aforesaid groove (2), whereby the material of the bosses is concomitantly pushed back radially towards the inside, until the bosses disappear, thus rendering uniform the cross-section of groove (2).

7. Method according to claim 6, characterized in that, concomitantly with the aforesaid pushing back, the edge of cover (4) is completely crimped and clamped in a tight and sealed manner on the edge of the aforesaid container body.

**Fig. 1**

**Fig. 11**

22

23

29

23

30

28

_Fig. 3_

21

31

30

_Fig. 2_

20

21

27

23

26

23

23

23

25

22

23

24

3

**FIG. 4**

**FIG. 6**

**FIG. 5**

**FIG. 9 A**

**FIG. 9 B**

**FIG. 9 C**

**FIG. 10 A**

**FIG. 10 B**

EP 0 164 277 B1

**Fig. 7**

**Fig. 8**

**Fig. 9**

**Fig. 10**